# EUROPÄISCHE PATENTANMELDUNG

(11) **EP 3 739 233 A1**
(43) Veröffentlichungstag der Anmeldung: **18.11.2020**
(21) Anmeldenummer: 20174768.0
(22) Anmeldetag: 14.05.2020
(51) Int. Cl.: F16F 9/30, E03D 11/14

(54) **INSTALLATIONSANORDNUNG FÜR EINE TOILETTENSCHÜSSEL**

(30) Priorität: 15.05.2019 DE 202019102743 U; 15.08.2019 DE 102019122003
(71) Anmelder: Aqseptence Group GmbH, 65326 Aarbergen (DE)
(72) Erfinder: FEENDERS, Hergen, 60487 Frankfurt am Main (DE)
(74) Vertreter: Stoffregen, Hans-Herbert

(57) **Zusammenfassung**

Die Erfindung bezieht sich auf eine Installationsanordnung für eine Toilettenschüssel (10), umfassend eine kopf- und bodenseitige Abschnitte (20, 22) aufweisende Tragkonstruktion (12) für die Toilettenschüssel und zumindest eine mit der Tragkonstruktion wechselwirkende mit einer Begrenzungswandung (16) verbindbare Halterung (24), wobei die Tragkonstruktion (12) über zumindest ein erstes Dämpfungselement (40) gegenüber der Halterung (24) abgestützt ist.

## Beschreibung

Die Erfindung bezieht sich auf eine Toilettenschüsselinstallationsanordnung, insbesondere einer Toilettenschüssel einer Vakuumanlage, umfassend eine kopf- und bodenseitige Abschnitte aufweisende Tragkonstruktion, wie Wandmontagerahmen, für die Toilettenschüssel und zumindest eine mit der Tragkonstruktion wechselwirkende mit einer Begrenzungswandung verbindbare Halterung sowie zumindest ein die Tragkonstruktion gegenüber der Halterung abstützendes erstes Dämpfungselement und zumindest ein einen bodenseitigen Abschnitt der Tragkonstruktion gegenüber einer Abstützung, wie Boden, abstützendes zweites Dämpfungselement.

Insbesondere bei in einer Vakuumkanalisation integrierten Toilette ist der Spülvorgang mit einer starken Geräuschbildung verbunden. Ist dabei die Toilettenschüssel über einen Montagerahmen mit einer Begrenzungswandung verbunden, so wird der Schall insbesondere über diesen weitergeleitet.

Der DE 102 19 017 A1 ist eine Befestigungsvorrichtung für ein WC zu entnehmen, die bei Belastung des WC eine kraftschlüssige und im unbelasteten Zustand eine weichfedemde Verbindung bietet.

In der EP 0 663 480 A1 wird ein Sanitär-Installationssystem beschrieben, das bereichsweise ein schalldämmendes Material aufweist.

Ein Montageblock für eine wandseitige Anbringung von haustechnischen Einrichtungen ist aus der EP 0 662 546 A2 bekannt, wobei zwischen einer Trägereinheit und einer Wandbefestigungseinheit über ein Dämmmaterial eine Entkopplung gegeben ist.

Körperschall- und/oder Schwingungs-Dämpfungselemente, um Geräte an Vertikalwänden zu befestigen, werden in der DE 296 08 941 U1 beschrieben.

Gegenstand der DE 115 02 864 A1 ist ein Trägersystem für Bade- oder Duschwannen, das eine Schallentkopplung aufweist.

Der vorliegenden Erfindung liegt die Aufgabe zugrunde, eine Installationsanordnung zuvor beschriebener Art so weiterzubilden, dass eine Schallübertragung über den Montagerahmen reduziert wird, insbesondere ein Absorbieren von Schall ermöglicht wird.

Gleichzeitig soll sichergestellt sein, dass die bei Benutzung des WC auftretenden Belastungen zu Beschädigungen der Begrenzungswandungen nicht führen.

Zur Lösung der Aufgabe sieht die Erfindung im Wesentlichen vor, dass das zumindest eine erste Dämpfungselement und/oder das zumindest eine zweite Dämpfungselement einen Sandwichaufbau mit zwischen äußeren plattenförmigen Elementen angeordneter elastischer Zwischenlage aufweist, und dass das zumindest eine erste Dämpfungselement die Tragkonstruktion horizontal und das zumindest eine zweite Dämpfungselement oder zumindest zwei zweite Dämpfungselemente die Tragkonstruktion sowohl horizontal als auch vertikal abstützen, wobei eine belastungsabhängige Bewegung der Tragkonstruktion sowohl horizontal als auch vertikal begrenzt ist.

Erfindungsgemäß wird die Toilettenschüssel über zumindest ein erstes Dämpfungselement mit der Tragkonstruktion und über ein zumindest zweites Dämpfungselement mit der Abstützung, wie Boden, verbunden, so dass eine unmittelbare Verbindung der Tragkonstruktion, die insbesondere als Montagerahmen ausgebildet ist, und der Begrenzungswandung bzw. dem Boden als Abstützung unterbleibt. Dabei ist das durch die Dämpfungselemente gebildete Dämpfungssystem derart ausgelegt, dass bei Benutzung der Toilettenschüssel eine quasi starre Verbindung zwischen der Tragkonstruktion und dem Boden gegeben ist, ohne dass jedoch eine solche zwischen der Tragkonstruktion und einer von der Begrenzungswandung ausgehenden Halterung erfolgt. Ist die Toilettenschüssel nicht belastet, so ist eine vollständig elastische Verbindung und damit Schallentkopplung zwischen der Tragkonstruktion und dem Boden sowie der von der Begrenzungswandung ausgehenden Halterung gegeben. Eine Schallübertragung wird über die Tragkonstruktion unterbunden. Es bestehen keine Fixpunkte.

Durch die erfindungsgemäße Lehre kann verhindert werden, dass eine direkte Verbindung zwischen der Tragkonstruktion und der Begrenzungswandung bzw. dem Boden erforderlich ist, gleichzeitig können jedoch hohe Lasten aufgenommen werden.

Gemäß der erfindungsgemäßen Lehre kann bei hoher Belastung, also bei Nutzung der Toilettenschüssel, ein statischer Zustand erreicht werden, ohne dass bei Nichtbenutzung, also ohne belasteter Toilettenschüssel, der elastische Zustand unterbunden wird, so dass eine Schallentkopplung ermöglicht wird.

Insbesondere ist vorgesehen, dass die Zwischenlage aus zumindest einem Material aus der Gruppe Kunststoff, Kautschuk besteht oder enthält.

Bevorzugterweise sollte die Zwischenlage aus einem Elastomer bestehen oder dieses enthalten, insbesondere Polyurethan oder Polyetherurethan.

Um auszuschließen, dass die elastische Zwischenlage zu stark belastet wird bzw. durch die Bewegung der Trägeranordnung Beschädigungen in den Bereichen erfolgen, in denen die Trägeranordnung befestigt ist, erfolgt eine Bewegungsbegrenzung der Trägeranordnung. Hierzu ist insbesondere vorgesehen, dass die Bewegungsbegrenzung durch einen vorzugsweise einen punktförmigen Kontakt ermöglichenden Anschlag erfolgt. Dabei sollte die Bewegungsbegrenzung X in horizontaler und/oder in vertikaler Richtung X ≤ 3 mm, vorzugsweise X ≤ 2 mm betragen.

Vorsprung und gegenüberliegendes plattenförmiges Element bilden somit einen Anschlag, so dass die elastische Zwischenlage nicht unnötig belastet wird und Beschädigungen unterbleiben. Dabei kann der Vorsprung, der als Kugelabschnitt ausgebildet sein kann, in eine entsprechend geometrisch angepasste Aussparung in dem gegenüberliegenden plattenförmigen Element eindringen, so dass gleichzeitig ein seitliches Verschieben der Plattenelemente bei hohen Belastungen ausgeschlossen ist. Andere Geometrien des Vorsprungs bzw. der dieser angepassten Ausnehmung sind gleichfalls möglich.

Insbesondere ist vorgesehen, dass der Vorsprung und das gegebenenfalls als Aussparung ausgebildete Gegenelement derart geometrisch ausgebildet sind, dass bei einem Kontakt nur eine kleine Kontaktfläche entsteht, so dass auch dann, wenn Vorsprung und Gegenelement sich berühren, in Verbindung mit der entkoppelnden Zwischenlage eine Geräuschminderung erzielt werden kann.

Insbesondere sollte beim Auftreten der Bewegungsbegrenzung, also dann, wenn der Anschlag wirkt, in etwa eine punktförmige Berührung vorliegen, um eine Schallübertragung zu minimieren.

Bevorzugterweise sieht die Erfindung vor, dass von der Tragkonstruktion ein entlang der Begrenzungswandung verlaufendes erstes Adapterelement ausgeht, zwischen dem und der Halterung das zumindest eine erste Dämpfungselement verläuft.

Die Halterung selbst sollte zumindest ein Profilelement, vorzugsweise zumindest zwei zueinander beabstandet verlaufende Profilelemente aufweisen oder aus dieser bzw. diesen bestehen, wobei das Profilelement ein Z-Profil mit einem mit der Begrenzungswandung verbindbaren ersten Außenschenkel aufweist, der über einen senkrecht zu dem ersten Außenschenkel verlaufenden Mittelschenkel in ein parallel zu dem ersten Außenschenkel verlaufenden zweiten Außenschenkel übergeht, zwischen dem und dem ersten Adapterelement das zumindest eine erste Dämpfungselement verläuft.

Somit ist eine problemlose Befestigung des Profils mit der Begrenzungswandung über den ersten Außenschenkel möglich. Der zweite Außenschenkel läuft beabstandet zur Begrenzungswandung, so dass in dem Zwischenraum das vorzugsweise plattenförmig ausgebildete erste Adapterelement sowie das zumindest eine erste Dämpfungselement verläuft, das seinerseits an der Innenseite des zweiten Außenschenkels anliegt. Selbstverständlich kann auch entlang der Außenseite des ersten Adapterelements, also der Seite, die der Begrenzungswandung zugewandt ist, ein weiteres erstes Dämpfungselement angeordnet sein.

Zur dämpfenden bzw. bei Belastung statischen Abstützung der Tragkonstruktion und damit der Toilettenschüssel ist insbesondere vorgesehen, dass von dem bodenseitigen Abschnitt der Tragkonstruktion ein zweites Adapterelement ausgeht oder der bodenseitige Abschnitt ein solches aufweist, und dass zwischen dem zweiten Adapterelement und einem die Tragkonstruktion abstützenden Bodenelement zumindest das eine zweite Dämpfungselement verläuft.

Des Weiteren sollte das zweite Adapterelement eine im Schnitt T-förmige Geometrie oder einen Abschnitt mit einer entsprechenden Geometrie aufweisen, wobei zwischen dessen parallel zu der Abstützung verlaufenden Mittelschenkel und dem Bodenelement ein erstes zweites Dämpfungselement verläuft.

Die Tragkonstruktion selbst zeichnet sich insbesondere dadurch aus, dass von dem Bodenplattenelement ein parallel zum Querschenkel des T-förmigen Abschnitts des zweiten Adapterteils verlaufender Bodenelementabschnitt ausgeht, zwischen dem und dem Querschenkel ein zweites zweites Dämpfungselement verläuft.

Des Weiteren sieht die Erfindung vor, dass die Tragkonstruktion zwei parallel zueinander und senkrecht zu der Abstützung verlaufende Rahmenschenkel aufweist, über die die Tragkonstruktion über das zweite Adapterelement auf der Abstützung abstützbar ist, und dass zwischen den Rahmenschenkeln und diese verbindend das plattenförmig ausgebildete erste Adapterelement verläuft, das sich vorzugsweise über jeweiligen parallel zu den Rahmenschenkeln verlaufenden Außenrand des Profilelementes erstreckt.

Durch die erfindungsgemäße Lehre wird eine effiziente Schallminderung erzielt, ohne dass aufwendige konstruktive Änderungen an der Tragkonstruktion bzw. Befestigung einerseits an der Begrenzungswandung und andererseits bezüglich der bodenseitigen Abstützung der Tragkonstruktion erforderlich sind. Ein Austausch der Dämpfungselemente kann problemlos erfolgen.

Dies ist insbesondere in Bezug auf das bzw. die ersten Dämpfungselemente dadurch realisierbar, dass das bzw. die Dämpfungselemente einerseits an der parallel zum zweiten Außenschenkel verlaufenden Fläche des ersten Adapterelements anliegen und andererseits zwischen parallel verlaufenden und von der Fläche abragenden Stegen angeordnet sind. Hierdurch ist ein Herabfallen der Dämpfungselemente ausgeschlossen, gleichzeitig ist ein problemloses Entfernen ermöglicht. Hierzu ist es nur erforderlich, dass die Tragkonstruktion in Richtung der Begrenzungswand gedrückt wird, so dass der Abstand zwischen dem ersten Adapterelement und dem zweiten Außenschenkel der Halterung vergrößert und somit das bzw. die Dämpfungselemente entfernt werden können. Dabei sollten die Dämpfungselemente derart positioniert sein, dass diese dann, wenn die Betätigungsplatte des Spülkastens entfernt wird, zugänglich sind.

Um unzulässige Belastungen insbesondere der Begrenzungswandung bzw. z. B. auf dieser angebrachter Fliesen auszuschließen, sind die das Zusammendrücken der elastischen Zwischenlagen begrenzenden Anschläge vorgesehen.

Die Anschläge bzw. Anschlagpunkte sind derart ausgebildet, dass diese insbesondere dann wirken, wenn die Toilettenschüssel belastet ist, so dass vertikale / waagerechte Verschiebungen auf ein Minimum reduziert werden. Gleichzeitig werden die elastischen Zwischenlagen geschont.

Zu der Bewegungsbegrenzung ist anzumerken, dass durch das Eigengewicht der Installationsanordnung insbesondere dann, wenn durch diese Kraftkomponenten erzeugt werden, die im erheblichen Umfang zur Begrenzungswand hin gerichtet sind, bereits nach erfolgter Montage der Anschlag wirken kann - also eine weitere Bewegung unterbunden wird -, und zwar insbesondere im Kopfbereich der Trägeranordnung. Gleiches kann auftreten, wenn z.B. montagebedingt zwischen der Adapterplatte und der Wandbegrenzung Dämmmaterial in einem Umfang eingebracht ist, durch das die Adapterplatte in Richtung des oberen Schenkels des Z-Profils verstellt wird, so dass der Anschlag in Wirkung tritt. Ungeachtet dessen ist eine hinreichende Schallentkopplung dann gegeben, wenn entsprechend der erfindungsgemäßen Lehre ein quasi punktförmiger Kontakt durch den Anschlag gegeben ist. Das Eigengewicht kann zu einer belastungsabhängigen Bewegung der Tragkonstruktion führen, wobei der Anschlag eine weitere Bewegung der Tragkonstruktion verhindern kann. Im Bodenbereich sollten die das weitere Zusammendrücken der zweiten Dämpfungselemente verhindernden Anschläge erst dann wirken, wenn eine zusätzliche Belastung zum Beispiel durch eine das WC nutzende Person auftritt.

Sind die Anschläge vorzugsweise in den Dämpfungselementen integriert, so besteht ohne Weiteres die Möglichkeit, eine räumliche Trennung vorzunehmen.

Sind im Bodenbereich vorzugsweise zumindest zwei zweite Dämpfungselemente vorgesehen, von denen eines die horizontale Bewegung und das andere die vertikale Bewegung der Tragkonstruktion aufnehmen, so besteht auch die Möglichkeit, dass zwei zweite Dämpfungselemente durch ein drittes Dämpfungselement ersetzt werden, das sowohl die horizontale als auch die vertikale Bewegung aufnimmt. Hierzu kann das einen Sandwichaufbau aufweisende Dämpfungselement derart angeordnet werden, dass die Plattenelemente zur Vertikalen geneigt verlaufen, also z. B. unter einem Winkel von 45° zur Horizontalen.

Durch die erfindungsgemäße Lehre ist eine uneingeschränkte statische Belastung der Toilette möglich. Gleichzeitig ist eine akustische Entkopplung gewährleistet. Dabei erfolgt eine Abstützung im oberen Bereich in horizontaler Richtung und im Bodenbereich in vertikaler als auch in horizontaler Richtung. Um die Bewegung zu begrenzen, sind die Anschläge vorgesehen. Hierdurch ergibt sich der Vorteil, dass als Dämmmaterial solches benutzt werden kann, das eine gute akustische Dämpfung ermöglicht. Auch eine hinreichende Dicke kann gewählt werden, da mit der Dämmschicht selbst die Bewegung nicht begrenzt werden muss.

Die akustische Entkopplung ergibt sich insbesondere durch die Materialauswahl der Dämpfungselemente, wobei die äußeren Platten aus Kunststoff und die elastische Zwischensicht aus einem Elastomer wie Polyurethan oder Polyetherurethan bestehen sollte.

Vorteil der Dämpfungselemente in Sandwichbauweise ist auch, dass Einheiten zur Verfügung gestellt werden, die auch im montierten Zustand des WC problemlos entfernt und ausgetauscht werden können.

Durch Veränderung der Auflagefläche, also der die elastische Zwischenlage begrenzenden Flächen der Plattenelemente kann die Flächenpressung beeinflusst und somit an die auf die auf die Toilettenschüssel einwirkenden Kräfte angepasst werden. Auch besteht gegebenenfalls die Möglichkeit, die Länge des von einem der Plattenelemente ausgehenden Vorsprungs, durch den der Anschlag gebildet wird, zu variieren.

Da die elastische Zwischenlage Alterungsprozessen unterliegen kann, können die Dämpfungselemente auch im montierten Zustand der Installationsanordnung ausgetauscht werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Seitenansicht einer Installationsanordnung für eine insbesondere an ein Vakuumabwassersystem anschließbare Toilettenschüssel,
- Fig. 2: ein Detail der Installationsanordnung in deren oberen Bereich und
- Fig. 3: ein Detail im unteren Bereich der Installationsanordnung,
- Fig. 4:: eine Vorderansicht der Tragkonstruktion der Installationsanordnung,
- Fig. 5:: eine Adapterplatte mit Wandhalterung und Dämpfungselement und
- Fig. 6:: eine weitere Ausführungsform einer bodenseitigen Anordnung eines Dämpfungselements.

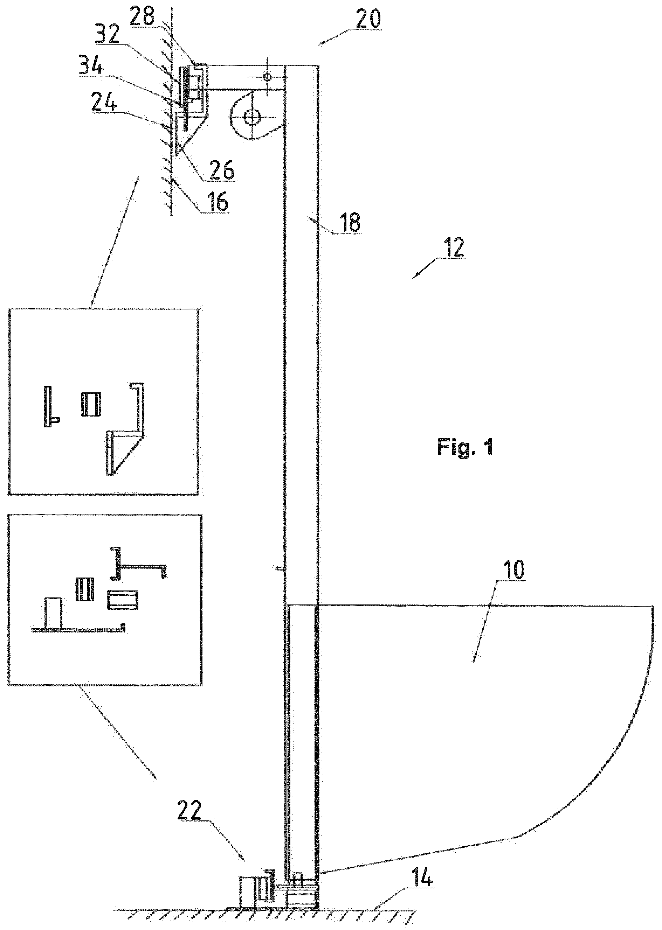

In der Fig. 1 ist eine Installationsanordnung für eine Toilettenschüssel 10 rein prinzipiell dargestellt, die insbesondere an eine Vakuumabwasseranlage angeschlossen ist.

Da beim Spülvorgang eine starke Geräuschbildung entsteht wird durch die erfindungsgemäße Installationsanordnung sichergestellt, dass der auftretende Schall gedämpft wird. Gleichzeitig wird jedoch sichergestellt, dass bei Belastung der Toilettenschüssel eine statische Einheit zur Verfügung steht, ohne dass durch die schallabsorbierende und damit elastische und folglich sich bewegende Anordnung Befestigungsbereiche beschädigt werden.

Die Installationsanordnung oder Tragkonstruktion 12 wird in gewohnter Weise einerseits auf einem Boden 14 abgestützt und andererseits mit einer Begrenzungswandung 16 verbunden.

Die Tragkonstruktion 12 weist insbesondere zwei parallel zueinander und im montierten Zustand vertikal verlaufende Profilschenkel 18, 19 auf, die über Querstreben 21, 23, 25 verbunden sind. Insoweit wird auf bekannte Konstruktionen verwiesen.

Die Tragkonstruktion 12 ist mit ihrem oberen oder Kopfabschnitt 20 an der Begrenzungswandung 16 und mit ihrem unteren oder Bodenabschnitt 22 auf dem Boden 14 abgestützt.

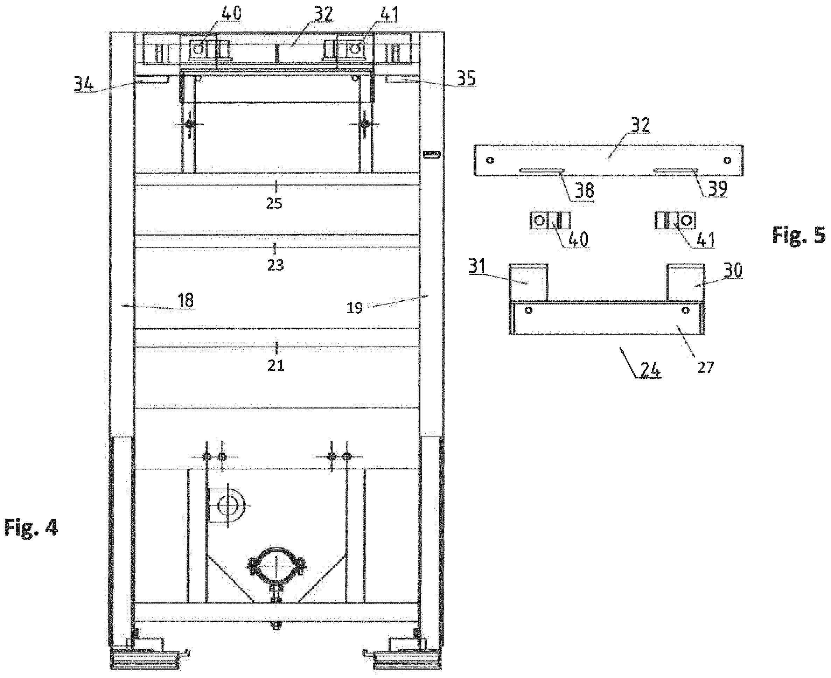

Zum Positionieren und Ausrichten der Tragkonstruktion 12 zu der Begrenzungswandung 16 ist eine Halterung 24 vorgesehen, die im Ausführungsbeispiel 2 Z-Profile aufweist, und zwar in ihrem jeweiligen Endbereich, wie sich aus der Fig. 5 ergibt. Die Profile sind über eine Flachplatte 27 verbunden.

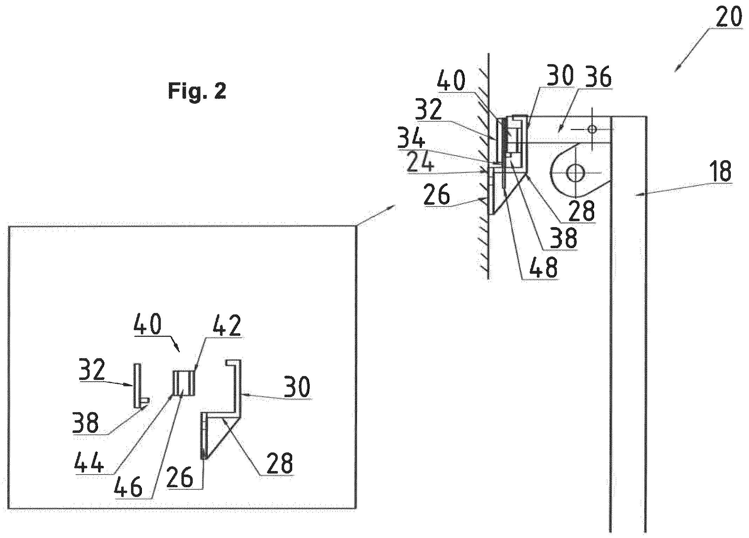

Jedes Z-Profil, wie dieses der Fig. 2 zu entnehmen ist, weist einen unteren Außenschenkel 26 auf, der mit der Begrenzungswandung 16 verbunden wie verschraubt wird.

Parallel zu dem Außenschenkel 26 verläuft ein über den Außenschenkel 26 vorstehender oberer Außenschenkel 30, 31, die über einen senkrecht zu diesen verlaufenden Mittelschenkel 28 verbunden sind. Die oberen Außenschenkel 30, 31 verlaufen somit beabstandet zur Begrenzungswandung 16.

In dem Zwischenraum zwischen den oberen Außenschenkeln 30, 31 und der Begrenzungswandung 16 verläuft eine mit der Tragkonstruktion 12 verbundene erste Adapterplatte 32. Wie insbesondere der Fig. 4 zu entnehmen ist, geht die erste Adapterplatte 32 von Plattenelemente 34, 35 aus, die mit senkrecht zu einer von den Schenkeln 18, 19 aufgespannten Ebene verlaufenden Querschenkeln 36 der Tragkonstruktion 12, sogenannten Hörnern, verbunden sind.

Innenseitig weist die erste Adapterplatte 32 zwei in Richtung der Innenseite der oberen Außenschenkel 30, 31 horizontal verlaufende Vorsprünge 38, 39 auf, auf denen jeweils ein erstes Dämpfungselement 40, 41 aufliegt, die in dem Zwischenraum zwischen der Adapterplatte 32 und den oberen Außenschenkeln 30, 31 der Halterung 24 verlaufen.

Bevorzugterweise verläuft im Abstand zu den Vorsprüngen 38, 39 und parallel zu diesen jeweils ein weiterer stegartiger Vorsprung, um zwischen diesen die ersten Dämpfungselemente 40, 41 zu fixieren. Jedes Dämpfungselement 40, 41 wird somit von einer im Schnitt U-förmigen Aufnahme umgeben.

Zwischen der Außenseite, also der begrenzungswandseitig verlaufenden Seite der Adapterplatte 32 und der Begrenzungswandung 16 können des Weiteren elastische Dämpfungselemente, insbesondere aus einem Material aus der Gruppe Kunststoff oder Kautschuk, vorhanden sein, wobei insbesondere ein Elastomer wie Polyetherurethan, hervorzuheben ist.

Das einen Sandwichaufbau aufweisende erste Dämpfungselement 40, 41 besteht aus zwei Plattenelementen 42, 44, zwischen denen eine elastische Zwischenlage 46 verläuft, die die Dämpfung bewirkt. Bei der elastischen Zwischenlage 46 handelt es sich insbesondere um ein Material aus der Gruppe Kunststoff oder Kautschuk, wobei insbesondere ein Elastomer, wie Polyetherurethan, benutzt wird. Die Platenelemente 42, 44 sollten aus Kunststoff bestehen.

Das erste bzw. die ersten Dämpfungselemente 40, 41 stellen eine horizontale Abstützung der Tragkonstruktion 12 sicher. Gleichzeitig erfolgt eine Schalldämmung.

Zum Aufhängen der Tragkonstruktion 12 können zwei Halterungen 24 vorgesehen sein, wobei die erste Adapterplatte 34 eine Länge aufweisen sollte, dass diese von beiden Halterungen 24 aufgenommen ist. Eine Halterung 24 ist jedoch zu bevorzugen.

Der Darstellung der Fig. 2 ist zu entnehmen, dass die Plattenelemente 34, 35 eine Höhe aufweisen, die größer als die der Adapterplatte 32 ist. Der Bereich, der über der Adapterplatte in Richtung Bodenbereich der Tragkonstruktion 12 verläuft, ist in Fig. 2 mit den Bezugszeichen 48 gekennzeichnet. Die Bereiche erstrecken sich entlang den äußeren Rändern der Z-Profile, so dass ein problemloses Einhängen und somit eine ordnungsgemäße Positionierung der Tragkonstruktion 12 sichergestellt ist.

Der untere oder Bodenabschnitt 22 der Tragkonstruktion 12 ist gegenüber dem Boden 14 gleichfalls über zumindest ein Dämpfungselement 50 abgestützt, das als zweites Dämpfungselement bezeichnet wird. Das zweite Dämpfungselement 50 verläuft dabei zwischen einem zweiten Adapterelement 52, das mit dem unteren Abschnitt 22 der Tragkonstruktion 12 verbunden ist, und einem Bodenelement 54, das mit dem Boden 14 verbunden ist.

Das zweite Adapterelement 52 weist im Schnitt eine T-Geometrie auf bzw. ein Abschnitt von dem zweiten Adapterelement 52 besitzt eine T-Geometrie mit einem Mittelschenkel 56 und einem Querschenkel 58. Der Mittelschenkel 56 verläuft parallel und der Querschenkel 58 senkrecht zum Boden 14.

Der Mittelschenkel ist endseitig in Richtung des Bodens 14 abgewinkelt. Entsprechend weist das Bodenelement 54 einen in Richtung des zweiten Adapterelements 52 abgewinkelten Abschnitt auf. Diese sind mit den Bezugszeichen 60, 62 gekennzeichnet. Entsprechend der zeichnerischen Darstellung verlaufen die abgewinkelten Abschnitte 60, 62 fluchtend zueinander und dienen als Anlage für das zweite Dämpfungselement 50, das gleichfalls einen Sandwichaufbau mit einer zwischen Plattenelementen 64, 66 verlaufenden elastischen Zwischenlage 68 aufweist, das aus zuvor beschriebenen Materialien bestehen kann. Gleiches gilt für die Plattenelemente 64, 66.

Die abgewinkelten Abschnitte dienen einerseits der Anlage. Dies ist jedoch nicht zwingend erforderlich. Andererseits dienen diese zum Schutz der Lager 50.

Neben der vertikalen Abstützung der Profilschenkel 18 ist im Bodenbereich 22 auch eine horizontal verlaufende Abstützung vorgesehen. Hierzu verläuft zwischen dem Querschenkel 58 des zweiten Adapterelements 52 und einem von dem Bodenelement 54 ausgehendem Anschlag 70 ein zweites zweites Dämpfungselement 72 mit einem Aufbau, wie dieser im Zusammenhang mit dem ersten Dämpfungselement 40 und dem zweiten Dämpfungselement 50 erläutert worden ist. Mit anderen Worten verläuft eine elastische Zwischenlage 74 zwischen zwei Plattenelementen 76, 78.

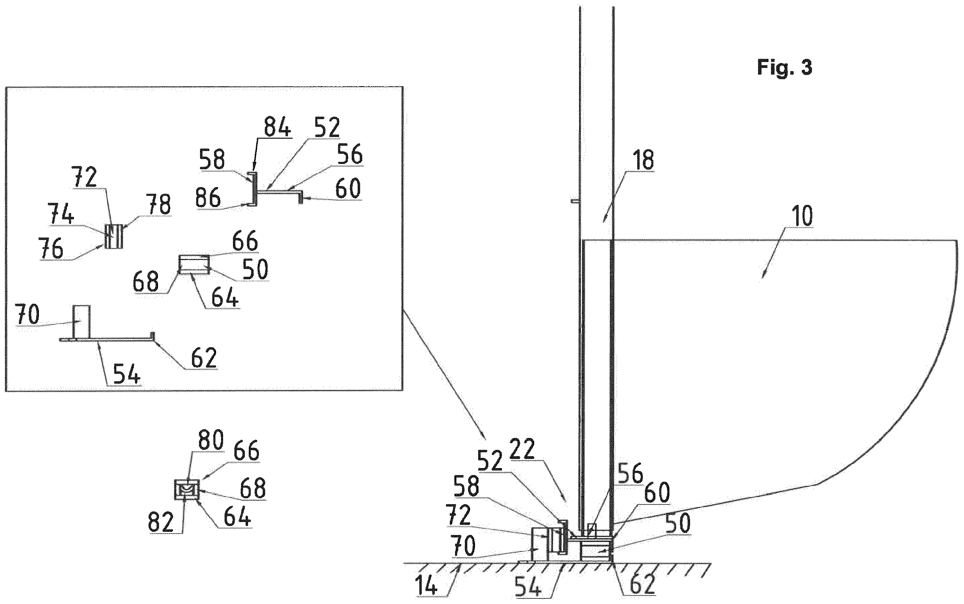

Zur eindeutigen Fixierung des Dämpfungselements 72 weist der Querschenkel 58 des zweiten Adapterelements 52 nach außen abgewinkelte Schenkelabschnitte 84, 86 auf, so dass der Querschenkel 58 im Schnitt eine U-Geometrie aufweist. Der Abstand zwischen den Schenkeln 84, 86 entspricht sodann der Länge des Dämpfungselements 72 entlang der Schenkel 18. Im montierten Zustand verläuft das Dämpfungselement 72 zwischen dem Querschenkel 58 und dem Anschlag 70, wie aus der Fig. 3 ersichtlich ist.

Durch die ersten und zweiten Dämpfungselemente 28, 50, 72 erfolgt bei unbelasteter Toilettenschüssel 10 eine hinreichende Dämpfung und damit Entkopplung einerseits zu den Halterungen 24 und andererseits zu dem Boden 14.

Bei belasteter Toilettenschüssel 10 ergibt sich in Bezug auf die Bodenabstützung eine statische bzw. steife Konstruktion. Hierzu ist insbesondere vorgesehen, dass zumindest das erste zweite Dämpfungselement 50, insbesondere die zwei zweiten Dämpfungselemente 50, 72 derart ausgebildet sind, dass die Plattenelemente 64, 66 bzw. 76, 78 auf Anschlag anliegen, ohne dass eine unzulässige Belastung der Zwischenlagen 68, 74 erfolgt. Hierzu ist entsprechend der Detaildarstellung in Fig. 3 vorgesehen, dass zum Beispiel von der Platte 66, und zwar von dessen Innenseite, ein zum Beispiel kalottenförmiger Vorsprung 80 in Richtung der gegenüberliegenden Platte 64 abragt, wobei dem Vorsprung 80 ein Gegenelement 82 in der Platte 64 zugeordnet ist.

Das Gegenelement 82 kann geometrisch an die Aussparung 82 angepasst sein. Ein entsprechendes Schlüssel-Schloss-Prinzip ist jedoch nicht zwingend erforderlich. Insbesondere sollten Vorsprung 80 und Gegenelement 82 in ihren Kontaktbereichen derart ausgebildet sein, dass sich bei einem Kontakt eine sehr kleine Kontaktfläche ergibt, so dass auch dann, wenn Vorsprung 80 und Gegenelement 82 kontaktiert sind, in Verbindung mit der entkoppelnden Zwischenlage 68 eine Geräuschverminderung erzielbar ist.

Durch den Vorsprung 80 und das Gegenelement 82 wird sichergestellt, dass die Platten 64, 66 nur soweit aufeinanderzu bewegt werden können, bis der Vorsprung 80 an dem ggfs. als Vertiefung 82 ausgebildeten Gegenelement 82 anliegt. Es wird somit ein Anschlag gebildet, wodurch sichergestellt ist, dass die elastische Zwischenlage 68 nicht unzulässig belastet und vor allem eine unzulässige Bewegung des Montagerahmens samt Toilette vermieden wird.

Ist in der Detaildarstellung Fig. 3 der Bereich zwischen dem Vorsprung 80 und der dem Gegenelement 82 wie Aufnahme von der elastischen Zwischenlage 68 nicht ausgefüllt, so kann selbstverständlich in diesem Bereich gleichfalls zumindest bereichsweise ein Zwischenlagenmaterial vorgesehen sein.

Bei Belastung der Toilettenschüssel 10 kontaktiert der Vorsprung 80 die Aussparung 82, so dass sich ein statisches Gebilde ergibt.

Entsprechend sollten sämtliche Dämpfungselemente 40, 41, 50, 72 ausgebildet sein.

Liegt keine Belastung vor, wirken die Dämpfungselemente 40, 41, 50, 72, so dass beim Spülvorgang Schall absorbiert werden kann.

Der Anschlag sollte dabei derart wirken, dass eine maximale vertikale und horizontale Verschiebung der Tragkonstruktion 12 um 3 mm, vorzugsweise 2 mm und weniger, erfolgen kann. Durch diese Maßnahme ist sichergestellt, dass die Belastung der Begrenzungen, von der die Tragkonstruktion ausgeht, insbesondere der Begrenzungswandung 16, so gering gehalten werden, dass Beschädigungen ausgeschlossen sind.

Sind im Bodenbereich Dämpfungselemente vorgesehen, die getrennt die horizontale und die vertikale Bewegung dämpfen, so kann auch ein Dämpfungselement vorgesehen sein, das sowohl die vertikale als auch die horizontale Dämpfung ermöglicht. Im Falle des Sandwichaufbaus verlaufen demzufolge die Plattenelemente geneigt zur Vertikalen und damit geneigt zur Horizontalen, vorzugsweise unter einem Winkel von 45°.

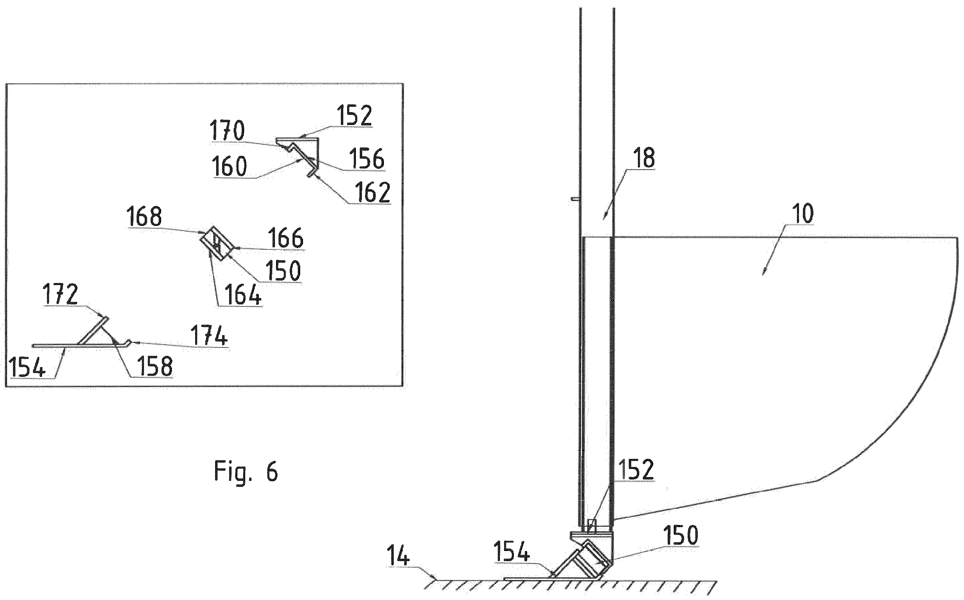

Eine entsprechende Ausführungsform ist der Fig. 6 zu entnehmen. So geht von jedem Profilschenkel 18, 19 ein zweites Adapterelement 152 mit einem im Schnitt U-förmigen Profilabschnitt 56 aus, der als Aufnahme für ein zweites Dämpfungselement 150 dient. Das U-Profil weist einen Querschenkel 160 und Seitenschenkel 162, 170 auf. Der Querschenkel 156 verläuft dabei unter einem Winkel geneigt zur Längsachse des Profilschenkels 18, 19, der zwischen 30 ° und 60 ° liegen sollte. Insbesondere sollte der Winkel 45 ° betragen, wie dies der zeichnerischen Darstellung zu entnehmen ist.

Der Abstand der Seitenschenkel 162, 170 ist derart, dass zwischen diesen das zweite Dämpfungselement 150 zuvor erläuterten Aufbaus einbringbar ist, das also eine zwischen Plattenelementen 164, 166 verlaufende elastische Zwischenlage 168 aufweist. Dabei ist der Abstand der Seitenschenkel 162, 167 der im Schnitt eine U-Form aufweisenden Aufnahme des Profilabschnitts 156 an die Breite des Dämpfungselements 150 angepasst, um dieses aufzunehmen.

Dem Adapterelement 152 ist ein Bodenelement 154 zugeordnet, das vom Boden 14 ausgeht, auf dem die Tragkonstruktion 12 abgestützt wird. Das Bodenelement 154 weist eine Anlagefläche 158 auf, die parallel zu dem Querschenkel 160 der durch das U-Profil 156 gebildeten Aufnahme verläuft. Im Ausführungsbeispiel ist die Anlagefläche 158 von Seitenschenkeln 172, 174 begrenzt, deren lichter Abstand der Breite des Dämpfungselementes 150 entspricht. Bodenelement 154 und Tragkonstruktion 12 und somit das Adapterelement 152 werden dabei derart zueinander ausgerichtet, dass das Dämpfungselement 150 zwischen der durch das U-Profil 156 gebildeten Aufnahme und der Anlagefläche 158 positioniert ist, wie dies aus der Übersichtsdarstellung in Fig. 6 erkennbar ist. Durch die geneigte Anordnung des zweiten Dämpfungselements 150 nimmt dieses sowohl horizontale als auch vertikale Kräfte auf.

Die Dimensionierung der entkoppelnden Dämpfungselemente, einerseits der vertikal verlaufenden Dämpfungselemente 40, 41, 72 und andererseits der horizontal verlaufenden Dämpfungselemente 50, erfolgt über Flächenpressung. Dabei liegt die Flächenpressung im unbelasteten Zustand der vertikal verlaufenden Dämpfungselemente 40, 41, 72, die die horizontale Bewegung dämpfen, oberhalb der Flächenpressung des horizontal verlaufenden Dämpfungselement 50, das die vertikale Bewegung dämpft, wobei insbesondere die Dimensionierung derart ausgelegt wird, dass die Flächenpressung im horizontal verlaufenden Dämpfungselement 50 so gewählt ist, dass der Vorsprung 80 an dem Gegenelement 82 anliegt oder nahezu anliegt.

So kann die Flächenpressung des Dämpfungselements 50 z. B. im Bereich zwischen 0,050 N/mm² und 0,080 N/mm² liegen.

Die Federwege der Dämpfungselemente sollte im Bereich zwischen 2,5 mm und 3,5 mm liegen, ohne dass hierdurch die Erfindung eingeschränkt wird.

## Patentansprüche

1. Toilettenschüsselinstallationsanordnung, insbesondere einer Toilettenschüssel (10) einer Vakuumanlage, umfassend eine kopf- und bodenseitige Abschnitte (20, 22) aufweisende Tragkonstruktion (12), wie Wandmontagerahmen, für die Toilettenschüssel und zumindest eine mit der Tragkonstruktion wechselwirkende mit einer Begrenzungswandung (16) verbindbare Halterung (24) sowie zumindest ein die Tragkonstruktion gegenüber der Halterung (24) abstützendes erstes Dämpfungselement (40) und zumindest ein einen bodenseitigen Abschnitt (22) der Tragkonstruktion gegenüber einer Abstützung, wie Boden (14), abstützendes zweites Dämpfungselement (50, 72, 150),
**dadurch gekennzeichnet,**
**dass** das zumindest eine erste Dämpfungselement (40) und/oder das zumindest eine zweite Dämpfungselement (50, 72, 152) einen Sandwichaufbau mit zwischen äußeren plattenförmigen Elementen (42, 44; 64, 66; 76, 78) angeordneter elastischer Zwischenlage (46, 68, 74) aufweist, und dass das zumindest eine erste Dämpfungselement (40, 41) die Tragkonstruktion (12) horizontal und das zumindest eine zweite Dämpfungselement (50, 72) oder zumindest zwei zweite Dämpfungselemente die Tragkonstruktion (12) sowohl horizontal als auch vertikal abstützen, wobei eine belastungsabhängige Bewegung der Tragkonstruktion sowohl horizontal als auch vertikal begrenzt ist.

2. Toilettenschüsselinstallationsanordnung nach Anspruch 1,
**dadurch gekennzeichnet,**
**dass** die Bewegungsbegrenzung durch einen vorzugsweise einen punktförmigen Kontakt ermöglichenden Anschlag erfolgt, wobei zur Bildung des Anschlags insbesondere von einem der plattenförmigen Elemente (42, 44; 64, 66; 76, 78) eine in Richtung des anderen plattenförmigen Elements abragender Vorsprung ausgeht, dem eine zwischen den plattenförmigen Elementen verlaufende Aussparung in der Zwischenlage (68) zugeordnet ist, die ggfs. bereichsweise von Zwischenlagematerial ausgefüllt ist.

3. Toilettenschüsselinstallationsanordnung nach Anspruch 1 oder 2,
**dadurch gekennzeichnet,**
**dass** die Bewegungsbegrenzung X in horizontaler und/oder in vertikaler Richtung beträgt X ≤ 3 mm, vorzugsweise X ≤ 2 mm, insbesondere 1 mm ≤ X ≤ 2 mm.

4. Toilettenschüsselinstallationsanordnung nach zumindest einem der vorhergehenden Ansprüche,
**dadurch gekennzeichnet,**
**dass** die Zwischenlage (46, 48, 74) des ersten und/oder zweiten Dämpfungselementes (50, 50, 72) aus zumindest einem Material aus der Gruppe Kunststoff, wie Elastomer, insbesondere Polyurethan oder Polyetherurethan, Kautschuk besteht oder enthält und/oder dass die plattenförmigen Elemente (42, 44, 64, 66, 76, 78) aus Kunststoff bestehen oder enthalten.

5. Toilettenschüsselinstallationsanordnung nach zumindest einem der vorhergehenden Ansprüche,
**dadurch gekennzeichnet,**
**dass** die Halterung (24) zumindest ein Profilelement aufweist oder aus diesem besteht, dass die Halterung zumindest abschnittsweise als ein Z-Profil mit einem mit der Begrenzungswandung (16) verbindbaren ersten Außenschenkel (26) ausgebildet ist, der über einen Mittelschenkel (28) in einen entlang, vorzugsweise parallel zu dem ersten Außenschenkel (26) verlaufenden zweiten Außenschenkel (30) übergeht, dass zwischen der Begrenzungswand und dem zweiten Außenschenkel ein von der Tragkonstruktion (12) ausgehendes erstes Adapterelement (34) verläuft und dass von dem ersten Adapterelement das zumindest eine erste Dämpfungselement ausgeht und sich an begrenzungswandseitig verlaufender Seite des zweiten Außenschenkels abstützt.

6. Toilettenschüsselinstallationsanordnung nach zumindest einem der vorhergehenden Ansprüche,
**dadurch gekennzeichnet,**
**dass** zwischen der Begrenzungswandung (16) und begrenzungswandseitig verlaufender Außenseite des ersten Adapterelements (24) ein weiteres Dämpfungselement oder Dämpfungsmaterial verläuft.

7. Toilettenschüsselinstallationsanordnung nach zumindest einem der vorhergehenden Ansprüche,
**dadurch gekennzeichnet,**
**dass** Flächenpressung der horizontal wirkenden Dämpfungselemente (40, 41, 72) größer als die des oder der vertikal wirkenden Dämpfungselemente (50, 150) ist.

8. Toilettenschüsselinstallationsanordnung nach zumindest einem der vorhergehenden Ansprüche,
**dadurch gekennzeichnet,**
**dass** von dem bodenseitigen Abschnitt (22) der Tragkonstruktion (12) ein zweites Adapterelement (52, 152) ausgeht oder der bodenseitige Abschnitt ein solches aufweist, und dass zwischen dem zweiten Adapterelement und einem die Tragkonstruktion abstützenden Bodenelement (54, 154) zumindest ein zweites Dämpfungselement (50, 150) verläuft.

9. Toilettenschüsselinstallationsanordnung nach zumindest einem der vorhergehenden Ansprüche,
**dadurch gekennzeichnet,**
**dass** das zweite Adapterelement (52) eine im Schnitt T-förmige Geometrie oder einen Abschnitt mit einer T-förmigen Geometrie aufweist, dass zwischen dessen parallel zu der Abstützung (14) verlaufenden Mittelschenkel (56) und dem Bodenplattenelement (54) ein erstes zweites Dämpfungselement (50) verläuft und/oder dass von dem Bodenplattenelement (54) ein parallel zum Querschenkel (58) des T-förmigen Abschnitts des zweiten Adapterteils (52) verlaufender Bodenplattenelementabschnitt (70) ausgeht, zwischen dem und dem Querschenkel ein zweites zweites Dämpfungselement (72) verläuft.

10. Toilettenschüsselinstallationsanordnung nach zumindest einem der vorhergehenden Ansprüche,
**dadurch gekennzeichnet,**
**dass** die Tragkonstruktion (12) zwei parallel zueinander und senkrecht zu der Abstützung (14) verlaufende Rahmenschenkel (18, 19) aufweist, über die die Tragkonstruktion (12) über das zweite Adapterelement (52) auf der Abstützung abstützbar ist, und dass zwischen den Rahmenschenkeln oder von diesen ausgehenden Abschnitten, wie Querschenkel (36), das plattenförmig ausgebildete erste Adapterelement (24) verläuft, das mit plattenförmigen Elementen (34, 35) verbunden ist, die von den Rahmenschenkeln (18, 19) bzw. den Querschenkeln (36) ausgehen.

11. Toilettenschüsselinstallationsanordnung nach zumindest einem der Ansprüche 1 - 8,
**dadurch gekennzeichnet,**
**dass** das zweite Adapterelement (152) eine zum Boden (14) hin offene Aufnahme aufweist, die im Schnitt eine U-Form aufweist, deren Querschenkel (160) zur Längsachse der Tragkonstruktion (12) geneigt verläuft, insbesondere unter einem Winkel von 30 ° und 60 °, vorzugsweise unter einem Winkel von 45 °, und dass der Aufnahme ein abstützungsseitig verlaufendes Bodenelement (154) mit einer Anlagefläche (158) zugeordnet ist, die parallel zu dem Querschenkel verläuft, und dass zwischen der Aufnahme und der Anlagefläche das zweite Dämpfungselement (150) angeordnet ist.

12. Toilettenschüsselinstallationsanordnung nach zumindest Anspruch 11,
**dadurch gekennzeichnet,**
**dass** die Anlagefläche (158) Querschenkel eines im Schnitt eine U-Form aufweisenden Profilabschnitts des Bodenelements (154) ist.
